# EUROPEAN PATENT APPLICATION

(11) **EP 3 418 475 A1**
(43) Date of publication of application: **26.12.2018**
(21) Application number: 17382385.7
(22) Date of filing: 21.06.2017
(51) Int. Cl.: E04H 15/46, E04F 10/02, E04F 10/06, E04H 6/44

(54) **PROTECTIVE SYSTEM AGAINST HAILSTONE DAMAGE FOR AIRCRAFTS**

(71) Applicant: Airbus Operations, S.L., 28906 Getafe Madrid (ES)
(72) Inventor: LÓPEZ LÓPEZ, Ladislao, 28906 Getafe (ES)
(74) Representative: Elzaburu S.L.P.

(57) **Abstract**

Protective system against hailstone damage for aircrafts, comprising:
- a protective sheet (1),
- a reel (2), the protective sheet (1) being rolled over the reel (2),
- a deployment element (3) of the protective sheet (1) from the reel (2), the deployment element (3) having two ends (11, 12), a first end (11) configured to be joined to the protective sheet (1) and a second fixed end (12), the first end (11) being pivotably movable around said fixed end (12) between a first position in which the protective sheet (1) is stored in the reel (2) and a second position in which the protective sheet (1) is deployed from the reel (2), and
- a support structure (4) configured to support the protective sheet (1) in its deployed position, being the support structure (4) located between the fixed end (11) of the deployment element (3) and the reel (2).

## Description

### Field of the invention

The invention is related to a protective system against hailstone damage specially indicated to protect aircrafts but also applicable for other kind of objects to be protected.

### Background of the invention

Different solutions exist to protect objects against hailstones damages.

In the state of the art are known inflatable protectors that are usually employed for covering vehicles and hence protect them from hailstone. Is also known a hail net supported by beams and therefore creating a roof that allows the location of the vehicles to be protected underneath the net.

In the aeronautic industry are known inflatable hangars that allows the placement of aircrafts and therefore their protection. It is also known the use of individual padded protections located over different parts of the aircraft protecting them against hailstone.

Although the above known solutions are efficient in protecting the elements against hailstone, they have the following disadvantages:
- Duration of installation: Current solutions need long time to be installed. Some of them are permanent installations.
- Easiness of installation: Current solutions need many human resources and technical means to be installed, especially considering the dimensions of aircrafts.
- Storage: Current solutions require wide spaces to store the protectors.

### Summary of the invention

The protective system object of the invention, comprises the following elements:
- a protective sheet, the protective sheet adapted to receive and stop the hailstone,
- a reel, the protective sheet being rolled over the reel, the reel configured to allow the deployment and retraction of the protective sheet from the reel,
- a deployment element of the protective sheet from the reel, the deployment element having two ends, a first end configured to be joined to the protective sheet and a second fixed end, the first end being pivotably movable around said fixed end between a first position in which the protective sheet is configured to be stored in the reel and a second position in which the protective sheet is deployed from the reel, and
- a support structure configured to support the protective sheet in its deployed position, being the support structure located between the fixed end of the deployment element and the reel.

Therefore, the protective system, once deployed, is able to cover the whole element or part of an element and comprises four main elements:
- a protective sheet that is deployed,
- a pivoting structure that extends the protective sheet over the element to be protected,
- a support structure that avoids the protector to be caught in any part of the element to be protected and collaborates in the extension of the protective sheet in an approximately horizontal position, and
- a reel that stores the protector when not in use.

Once the storm is finished, the reel will roll the protector and the structures will return to its initial position.

As the protective sheet, the deployment element and the support structure could be located in an stored position when they are not being used, there is no need to move and install big structures. Another advantage is that it has no impact in the surrounding area when the system is not deployed.

An additional advantage of the claimed invention is that the system can be controlled, for instance, hydraulically, and therefore its deployment or roll back can be done easily with very few human resources.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a perspective view of an embodiment of the invention covering the wing of an aircraft.
Figure 2 shows a front view of the embodiment of figure 1 in which the protective system is located in a buried configuration and in a retracted position.
Figure 3 shows a front view of the embodiment of figure 2 in which the support structure is deployed from its buried location.
Figure 4 shows a front view of the embodiment of figure 2 in which the deployment element unrolls the protective sheet.
Figure 5 shows a front view of the embodiment of figure 2 in which the deployment element extends the protective sheet over the support structure.
Figure 6 shows a front view of the embodiment of figure 2 in which the deployment element deploys the protective sheet over the element to be covered.
Figure 7 shows a plan view of the embodiment of figure 2 in which the protective sheet is deployed over the element to be covered.
Figure 8 shows a plan view and a lateral view of another embodiment in which the protective sheet entirely covers an aircraft.
Figure 9 shows a plan view of another embodiment in which several protective sheets cover different parts of an aircraft such as wings, horizontal tail planes and front fuselage.
Figure 10 shows a front view of an additional embodiment in which the support structure is telescopic.
Figure 11 shows a front view of an additional embodiment in which the support structure is rotatable.
Figure 12 shows a front view of an additional embodiment in which the protective system is located on a wheeled vehicle.

### Detailed description of the invention

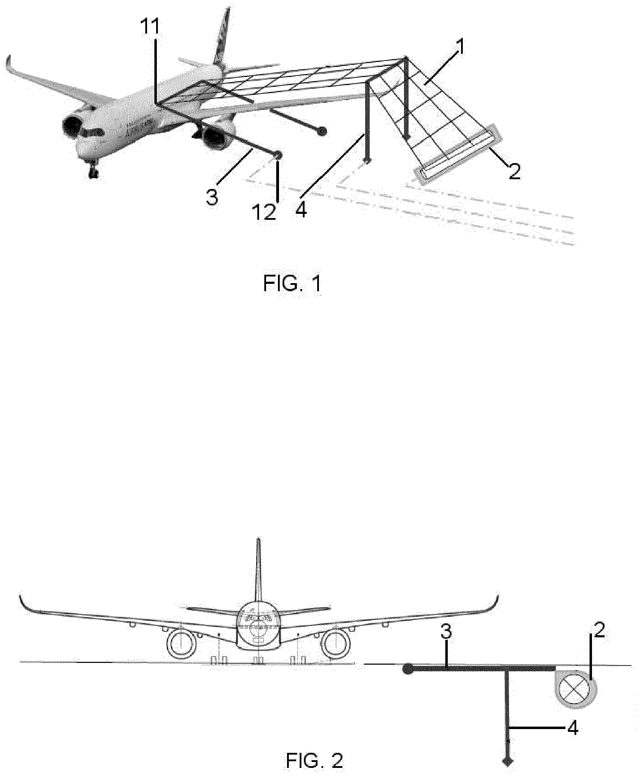

Figures 1 to 12 show different embodiments of the protective system object of the invention. Figure 1 shows a perspective view of the main elements of the protective system:
- the protective sheet (1), that will cover and protect the, for instance, wing of an aircraft against damages produced by the hailstone. It can be made by a net, a canvas, or any other suitable element,
- the reel (2) allowing the deployment and retraction of the protective sheet (1). The width of the reel (2) would be suitable for the size of the element to be covered,
- the support structure (4) that is located between the pivotation point of the deployment element (3) and the reel (2) and maintains the protective sheet (1) in an elevated position so as to create a space underneath of it suitable for an object to be located,
- a deployment element (3) of the protective sheet (2). The deployment element (3) has two ends, a first end (11) joined to a free end of said protective sheet (2) and a second end (12) that is fixed, such that the deployment element (3) is able to pivot around said second end (12).

In the shown embodiments, both the support structure (4) and the deployment element (3) have an inverted U shape. The deployment element (3) and the support structure (4) can be manufactured with a fixed dimension or can be made of different parts that can modify their size.

In figures 2 to 6, a first embodiment is shown in which the protective system is completely buried. The support structure (4) is buried on the ground in a retracted position and deployed from the ground when needed. The reel (2) is also buried on the ground, except an aperture for the deployment of the protective sheet (1). The deployment element (3) is located parallel and joined to the ground and also buried when not in use. Said embodiment has the advantage that it avoids obstacles when it is not deployed as, once the storm is finished, the reel (2), the protective sheet (1), the support structure (4) and the deployment element (3) will return to their initial position under the ground not leaving any obstacle neither causing impact in the activities to be performed.

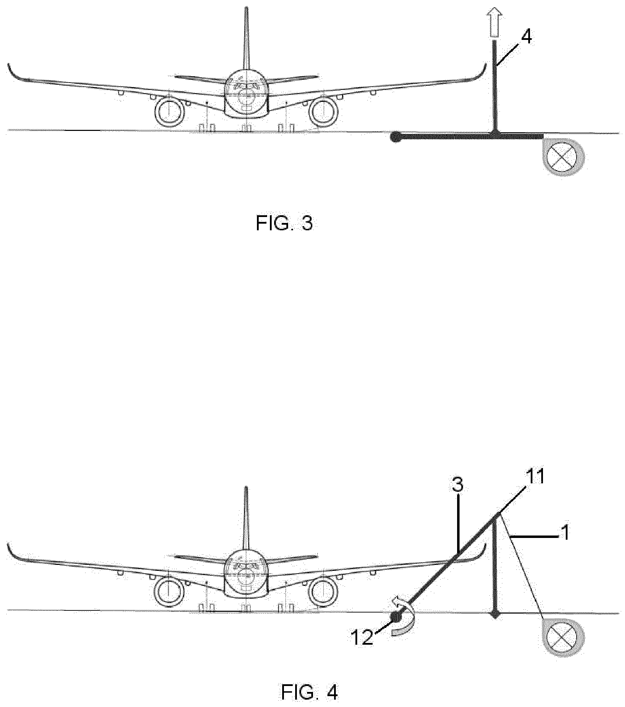

Figure 2 shows all the elements buried and figure 3 shows the support structure (4) after its vertical deployment from the ground. Figure 4 shows the deployment element (3) rotating around its pivoting point (12) such that the protective sheet (1) is being deployed.

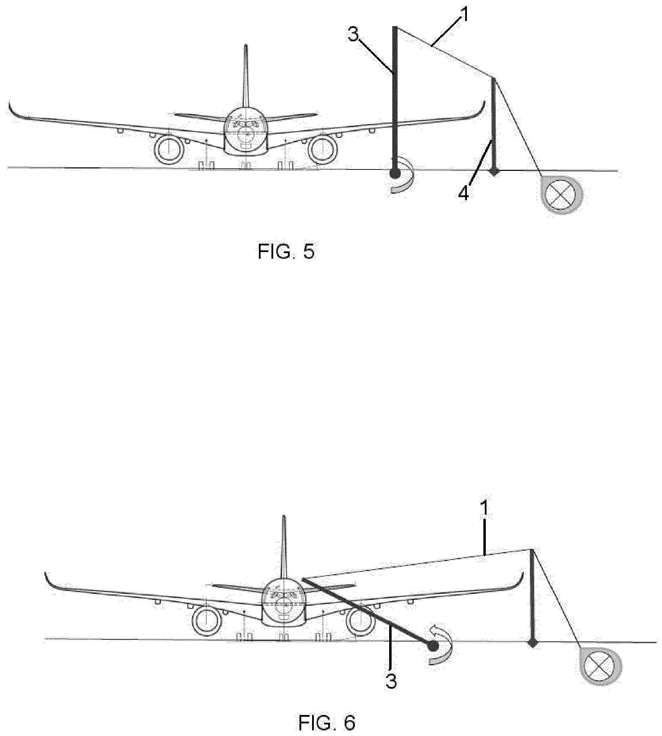

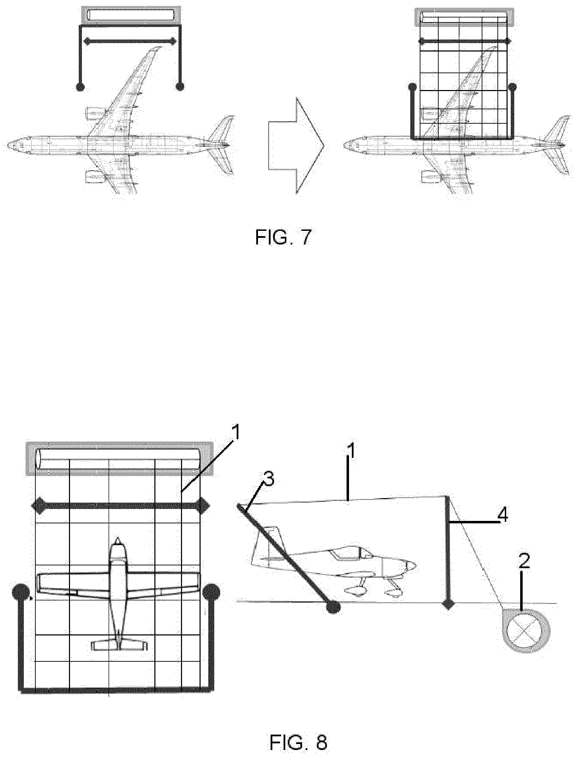

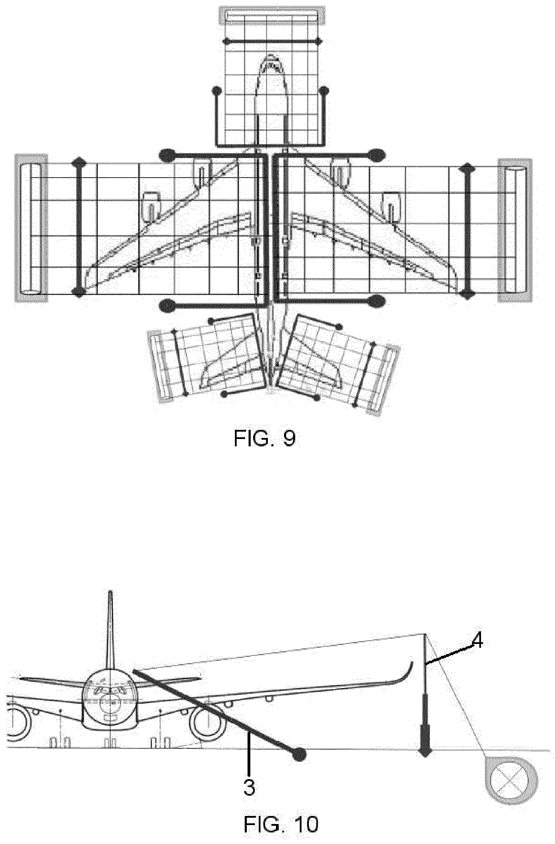

Figure 5 shows that, due to the location of the different elements of the protective system, the deployment of the protective sheet (1) is performed over the support structure (4) and finally figure 6 shows how the protective sheet (1) covers the wing of the aircraft after being totally deployed. Depending on the size of the element to be covered and of the reel (2), the protective sheet (1) can cover a part or the entirety of an aircraft as shown in figures 8 and 9. For instance, the reel (2) could have the length of the aircraft in order to protect totally its right or left part.

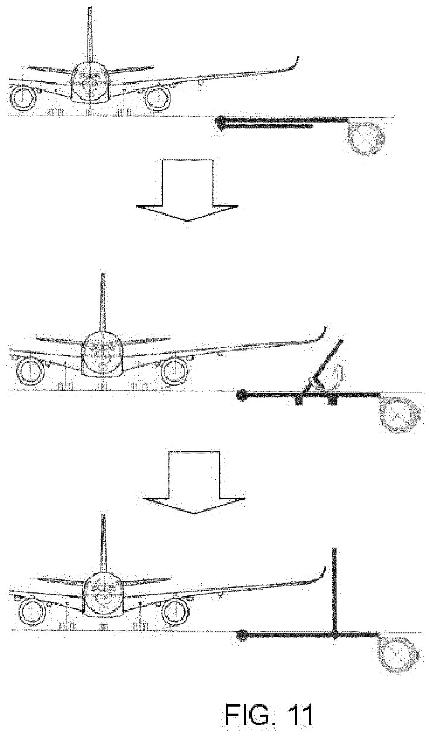

Figure 10 shows another embodiment wherein the support structure (4) is telescopically deployed from the ground in a vertical direction and figure 11 shows a support structure (4) comprising a rotatable vertical structure.

Another possibility not shown in the figures is the deployment element (3) being also telescopic thus having the possibility to be deployed from a stored position.

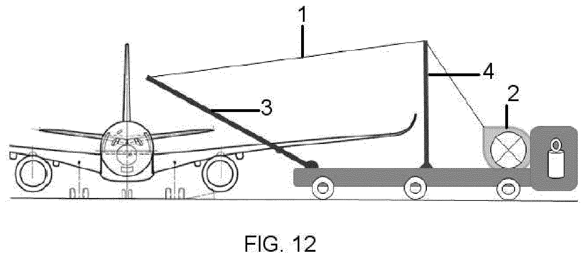

Finally, figure 12 shows an additional embodiment for a protective system located on a wheel vehicle such that the system is located on a mobile platform in order to easily move it.

The system can further comprises a processing unit configured to control the deployment of the support structure (4), the deployment unit and the protective sheet (1) such that a centralized control is performed. The elements can be operated by, for instance, hydraulic actuators that can be also buried. It has the advantage that the system can be controlled remotely through a centralized control increasing the security of the system for the operators that can control the deployment from a console.

## Claims

1. Protective system against hailstone damage, **characterized in that** it comprises:
- a protective sheet (1),
- a reel (2), the protective sheet (1) being rolled over the reel (2), the reel (2) configured to allow the deployment and retraction of the protective sheet (1) from the reel (2),
- a deployment element (3) of the protective sheet (1) from the reel (2), the deployment element (3) having two ends (11, 12), a first end (11) configured to be joined to the protective sheet (1) and a second fixed end (12), the first end (11) being pivotably movable around said fixed end (12) between a first position in which the protective sheet (1) is configured to be stored in the reel (2) and a second position in which the protective sheet (1) is deployed from the reel (2), and
- a support structure (4) configured to support the protective sheet (1) in its deployed position, being the support structure (4) located between the fixed end (11) of the deployment element (3) and the reel (2).

2. Protective system, according to claim 1, wherein the support structure (4) is movable between a first position in which it is stored and a second position in which is deployed to support the protective sheet (1).

3. Protective system, according to claim 2, wherein the support structure (4) is a telescopic structure movable between its first and second positions.

4. Protective system, according to claim 2, wherein the support structure (4) is rotatable between its first and second positions.

5. Protective system, according to any preceding claim, wherein the deployment element (3) has an inverted U shape.

6. Protective system, according to any preceding claim, wherein the support structure (4) has an inverted U shape.

7. Protective system, according to any preceding claim, wherein the protective system is configured to be located over a wheeled vehicle, the reel (2) configured to be located over an horizontal surface of the vehicle, the fixed end (11) of the deployment element (3) configured to be joined to said horizontal surface and the support structure (4) being configured to be located in a vertical position between the reel (2) and the fixed end (1).

8. Protective system, according to any preceding claim, wherein the protective system is configured to be located buried on ground in a retracted position, the reel (2) configured to be located buried, the fixed end (11) of the deployment element (3) configured to be located buried and the support structure (4) being configured to be located buried in a retracted position.

9. Protective system, according to any preceding claim, wherein it comprises a processing unit configured to control the deployment of the support structure (4), of the deployment element (3) and of the reel (2) for the deployment of the protective sheet (1).
